# NEW EUROPEAN PATENT SPECIFICATION

(11) **EP 1 623 857 B2**
(45) Date of publication and mention of the opposition decision: **31.07.2013**
(45) Mention of the grant of the patent: 28.03.2007
(21) Application number: 04254687.9
(22) Date of filing: 04.08.2004
(51) Int. Cl.: B60H 1/00, F25B 41/04, F25B 5/02

(54) **HVAC Systems**
Heizungs-, Lüftungs-, Klimatisierungssystem
Systèmes de chauffage, de ventilation, d'air conditionné

(43) Date of publication of application: 08.02.2006
(73) Proprietor: Delphi Technologies, Inc., Troy, Michigan 480007 (US)
(72) Inventor: Petesch, Jean-Claude, 8283 Kehlen (LU)
(74) Representative: Robert, Vincent

(56) References cited:
- EP-A- 1 462 281
- EP-A1- 0 913 282
- EP-A1- 1 226 990
- WO-A1-03/047895
- DE-A1- 19 855 309
- US-A1- 2003 182 961

## Description

This invention relates to heating, ventilating and air conditioning (HVAC) systems. The invention is particularly, but not exclusively, applicable to HVAC systems for use in vehicles.

It is known to provide HVAC systems in automobiles which can act in air conditioning mode for cooling the passenger compartment, and also in heat pump mode for heating it. Presently known systems tend to suffer from complexity and high manufacturing cost. Typically, separate heat exchangers will be used within the passenger compartment for heating and cooling. One reason for this is that the use of a common heat exchanger for both purposes can result in "flash fogging" when changing from cooling to heating, caused by the evaporation of moisture condensed on the heat exchanger during air conditioning operation.

EP 1 266 990 discloses a known vehicle HVAC system.

One object of the present invention is accordingly to provide a HVAC system of reduced complexity , fewer parts, and lower manufacturing cost.

The invention provides a vehicle HVAC system as claimed in claim 1.

Preferred features and advantages of the invention will be apparent from the following description and from the claims.

One embodiment of the invention will now be described, by way of example only, with reference to the drawings, in which:
Fig. 1 is a schematic diagram of a HVAC system for use in a car;
Fig. 2 shows the system of Fig. 1 operating in air conditioning mode; and
Fig. 3 shows the same system operating in heating mode.

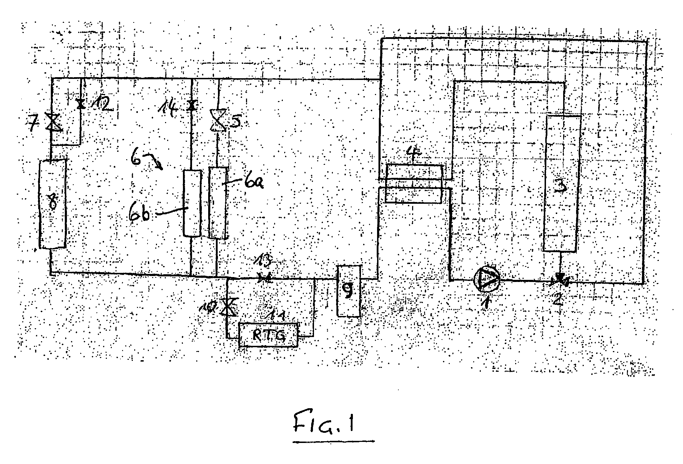

Referring to Fig. 1, the system in this example is designed to use a gas refrigerant such as CO₂, and comprises a compressor 1, an external gas cooler 3, and two cabin heat exchanger units 6 and 8 within the passenger cabin. The compressor 1 may be driven by the vehicle engine or by an electric motor. The gas cooler 3 is external in the sense that it is outside the vehicle compartment, typically being located in the engine compartment along with the compressor 1. Likewise, the cabin heat exchanger units 6, 8 are internal in the sense that they are located within the passenger compartment.

The heat exchanger unit 6 is preferably located in the front of the passenger compartment, and comprises two separate heat exchangers 6a and 6b. The heat exchanger unit 8 is preferably located in the rear of the passenger compartment and comprises a single heat exchanger.

The system also comprises various valves which will be described below, a refrigerant-to-refrigerant heat exchanger 4, an accumulator 9, and a refrigerant-to-glycol (RTG) heat exchanger 11.

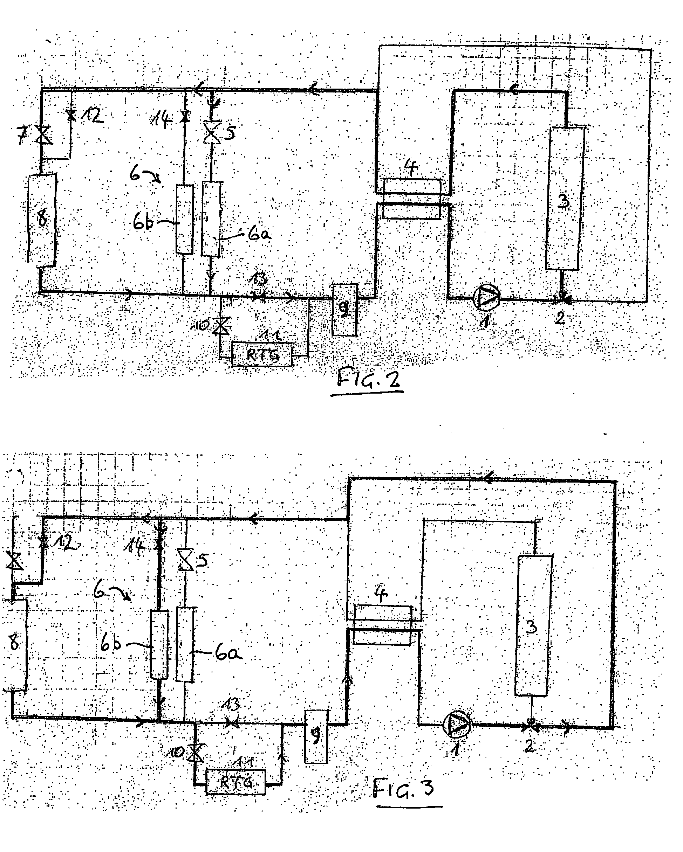

Figure 2 shows the system in use in air-conditioning mode. The compressor 1 supplies compressed refrigerant via a 3-position valve 2 to the gas cooler 3. The cooled refrigerant then passes via the heat exchanger 4 to the interior of the vehicle, where it is divided into front and rear paths.

The front path passes via an expansion device 5 to the heat exchanger 6a. Shut-off valve 14 is closed, cutting off the heat exchanger 6b. The rear path passes via expansion device 7 to the heat exchanger 8, shut-off valve 12 being closed at this time. The expansion devices 5, 7 are typically orifice tubes, but may be valves.

The front and rear paths rejoin, and the refrigerant flows via a shut-off valve 13, which is open to act as a bypass, to accumulator 9 and through the heat exchanger 4 to the intake side of the compressor 1.

Thus, in the air conditioning mode of Fig. 2 the front heat exchanger 6a and the rear heat exchanger 8 both act as evaporators and provide cooling.

Fig. 3 shows the system operating in heat pump mode. The 3-way valve 2 is set to cause compressed refrigerant to bypass the gas cooler 3 and the heat exchanger 4. Valve 14 is open to bypass refrigerant in the front path through the other front heat exchanger 6b. Valve 12 is open to bypass refrigerant in the rear path around the expansion device 7 and through rear heat exchanger 8. Valve 13 is closed to cause the combined refrigerant streams to flow through expansion device 10 and RTG heat exchanger 11.

Thus, in heat pump mode heat provided by the RTG heat exchanger 11 (and by the mechanical work of the compressor 1) is discharged into the passenger compartment through the front heat exchanger 6b and the rear heat exchanger 8.

By using a single rear heat exchanger there is a saving, of a heat exchanger and a separate set of refrigerant lines all the way to the rear module. It is preferred to use separate heat exchangers for heating and cooling in the front module due to the flash fogging problem. This is not necessary in the rear module since this uses only recirculated air, dehumidified by the front module and thus has less condensate. Also, the rear module usually has no ducts to the windshield, and is located away from the windshield, so that any moisture blown into the cabin by the rear module is unlikely to fog the windshield.

Although described particularly with reference to automotive use, the invention may also be applied to other forms of HVAC. The invention may be used with refrigerants operating in gas/liquid phases, in which case the external cooler would operate as a condenser.

Other modifications of the foregoing embodiment may be made. The use of a refrigerant-to-refrigerant heat exchanger is optional: it is typically advantageous with systems using gas (e.g. CO₂) as refrigerant. The refrigerant-to-glycol heat exchanger could be omitted and the external heat exchanger used instead in heat pump mode. The bypass with shut-off valve 12 can be omitted if the expansion device is a controllable valve which can be completely opened to give no (or negligible) expansion.

## Claims

1. A vehicle HVAC system operable selectively in air conditioning and heat pump modes to cool and beat, respectively, a passenger compartment of a vehicle, the system comprising a refrigerant circuit including a compressor (1), an external cooler (3), and two internal heat exchanger units (6,8) located within the passenger compartment of the vehicle; **characterised in that** one internal heat exchanger unit (8), called rear heat exchanger unit for being able to cool and heat air in a rear part of the passenger compartment, comprises a heat exchanger used for cooling air in the air conditioning mode and for heating air in the heat pump mode and the other internal heat exchanger unit (6), called front heat exchanger unit for being able to cool and heat air in a front part of the passenger compartment, comprises separate heat exchangers, a first (6a) used for cooling air in the air conditioning mode and a second (6b) used for heating air in the heat pump mode, the second (6b) of the separate heat exchangers being bypassed in the air conditioning mode, and the first (6a) of the separate heat exchangers being bypassed in the heat pump mode.

2. A system according to claim 1, in which said one heat exchanger unit (8) is supplied with refrigerant by two parallel conduits one of which contains an expansion device (7) whereby said one heat exchanger unit (8) may operate as an evaporator in air conditioning mode, the other conduit containing a shut-off valve.(12) which may be opened to bypass the expansion device (7) in heat pump mode.

3. A system according to claim 1 or claim 2, in which the first heat exchanger (6a) is in series with an expansion device (5) for operation as an evaporator in air conditioning mode, and the second heat exchanger (6b) is in series with a shut-off valve (14) which may be opened in heat pump mode to cause refrigerant to bypass the expansion device (5) and the first heat exchanger (6a).

4. A system according to any preceding claim, in which the refrigerant is a gas, the external cooler (3) is a gas cooler, and the system includes a refrigerant heat exchanger (11) upstream of the compressor (1) for adding heat to the refrigerant in heat pump mode.

5. A system according to claim 4, in which the refrigerant heat exchanger (11) is a refrigerant-to-glycol heat exchanger communicating in use with the coolant circuit of a vehicle.

6. A system according to claim 5, in which the refrigerant-to-glycol heat exchanger (11) is arranged in series with an expansion device (10) and in parallel with a bypass valve (13).

7. A system according to any preceding claim, including a refrigerant-to-refrigerant heat exchanger (4) through which refrigerant flows from the external cooler (3) in air conditioning mode, and which is bypassed by compressed refrigerant in heat pump mode.

## Patentansprüche

1. Fahrzeug-HLK-System, das selektiv in einem Klimatisierungs- und einem Wärmepumpenbetrieb zum Kühlen bzw. Heizen eines Fahrzeuginnenraums eines Fahrzeugs betrieben werden kann, wobei das System einen Kältemittelkreislauf aufweist mit einem Kompressor (1), einem externen Kühler (3) und zwei internen Wärmeaustauschereinheiten (6, 8), die sich in dem Fahrzeuginnenraum des Fahrzeugs befinden, **dadurch gekennzeichnet, dass** eine interne Wärmeaustauschereinheit (8), hintere Wärmeaustauschereinheit genannt, weil sie Luft in einem hinteren Teil des Fahrzeuginnenraums kühlen und erwärmen kann, einen Wärmeaustauscher umfasst, der im Klimatisierungsbetrieb zum Kühlen von Luft und im Wärmepumpenbetrieb zum Erwärmen von Luft verwendet wird, und die andere interne Wärmeaustauschereinheit (6), vordere Wärmeaustauschereinheit genannt, weil sie Luft in einem vorderen Teil des Fahrzeuginnenraums kühlen und erwärmen kann, separate Wärmeaustauscher umfasst, einen ersten (6a), der im Klimatisierungsbetrieb zum Kühlen von Luft verwendet wird, und einen zweiten (6b), der im Wärmepumpenbetrieb zum Erwärmen von Luft verwendet wird, wobei im Klimatisierungsbetrieb der zweite (6b) der separaten Wärmeaustauscher umgangen wird und im Wärmepumpenbetrieb der erste (6a) der separaten Wärmeaustauscher umgangen wird.

2. System nach Anspruch 1, wobei die genannte eine Wärmeaustauschereinheit (8) durch zwei parallele Leitungen mit Kältemittel versorgt wird, von denen eine eine Expansionsvorrichtung (7) enthält, womit die genannte eine Wärmeaustauschereinheit (8) im Klimatisierungsbetrieb als Verdampfer funktionieren kann, wobei die andere Leitung ein Absperrventil (12) enthält, das im Wärmepumpenbetrieb geöffnet werden kann, um die Expansionsvorrichtung (7) zu umgehen.

3. System nach Anspruch 1 oder Anspruch 2, wobei der erste Wärmeaustauscher (6a) mit einer Expansionsvorrichtung (5) in Reihe geschaltet ist, um im Klimatisierungsbetrieb als Verdampfer zu arbeiten, und der zweite Wärmeaustauscher (6b) mit einem Absperrventil (14) in Reihe geschaltet ist, das im Wärmepumpenbetrieb geöffnet werden kann, um Kältemittel die Expansionsvorrichtung (5) und den ersten Wärmeaustauscher (6a) umgehen zu lassen.

4. System nach einem der vorhergehenden Ansprüche, wobei das Kältemittel ein Gas ist, der externe Kühler (3) ein Gaskühler ist und das System einen zuströmseitig des Kompressors (1) angeordneten Kältemittelwärmeaustauscher (11) zum Erwärmen des Kältemittels im Wärmepumpenbetrieb aufweist.

5. System nach Anspruch 4, wobei der Kältemittelwärmeaustauscher (11) ein Kältemittel-Glykol-Wärmeaustauscher ist, der im Gebrauch mit dem Kühlwasserkreislauf eines Fahrzeugs kommuniziert.

6. System nach Anspruch 5, wobei der Kältemittel-Glykol-Wärmeaustauscher (11) in Reihe mit einer Expansionsvorrichtung (10) und parallel mit einem Umgehungsventil (13) angeordnet ist.

7. System nach einem der vorhergehenden Ansprüche mit einem Kältemittel-Kältemittel-Wärmeaustauscher (4), durch den im Klimatisierungsbetrieb Kältemittel aus dem externen Kühler (3) fließt und der im Wärmepumpenbetrieb von verdichtetem Kältemittel umgangen wird.

## Revendications

1. Système d'air conditionné fonctionnant sélectivement en modes air conditionné et pompe à chaleur pour refroidir et réchauffer, respectivement, un compartiment passager d'un véhicule, le système comprenant un circuit réfrigérant incluant un compresseur (1), un refroidisseur externe (3), et deux échangeurs thermique (6, 8) localisés dans compartiment passagers du véhicule, **caractérisé en ce que** un échangeur thermique (8), appelé échangeur thermique arrière pour être capable de refroidir et de chauffer l'air dans la partie arrière du compartiment passager, comprend un échangeur thermique utilisé pour refroidir l'air en mode air conditionné et pour chauffer l'air en mode pompe à chaleur et l'autre échangeur thermique (6), appelé échangeur thermique avant pour être capable de refroidir et réchauffer l'air dans la partie avant du compartiment passager, comprend des échangeurs thermiques séparés, un premier (6a) utilisé pour refroidir l'air en mode air conditionné et un second (6b) utilisé pour réchauffer l'air en mode pompe à chaleur, le second (6b) des échangeurs thermiques séparés étant contourné en mode air conditionné, et le premier (6a) des échangeurs thermiques séparés étant contournés en mode pompe à chaleur.

2. Système selon la revendication 1, dans lequel ledit échangeur thermique (8) est alimenté par un réfrigérant par deux conduits parallèles dont l'un contient un appareil d'expansion (7) où ledit échangeur thermique (8) peut fonctionner tel un évaporateur en mode air conditionné, l'autre conduit contenant une vanne (12) qui peut être ouverte pour contourner l'appareil d'expansion (7) en mode pompe à chaleur.

3. Système selon l'une des revendications 1 ou 2, dans lequel le premier échangeur thermique (6a) est en série avec un appareil d'expansion (5) pour fonctionner en tant qu'évaporateur en mode air conditionné, et le second échangeur thermique (6b) est en série avec la vanne (14) qui peut être ouverte en mode pompe à chaleur pour que le réfrigérant contourne l'appareil d'expansion (5) et le premier échangeur thermique (6a).

4. Système selon l'une quelconque des revendications précédentes dans laquelle le réfrigérant est un gaz, le refroidisseur externe (3) est un refroidisseur à gaz, et le système comprend un échangeur thermique réfrigérant (11) en amont du compresseur (1) pour ajouter la chaleur au réfrigérant en mode pompe à chaleur.

5. Système selon la revendication 4, dans lequel l'échangeur thermique réfrigérant (11) est un échangeur thermique réfrigérant au glycol communicant lors de l'utilisation avec le circuit réfrigérant d'un véhicule.

6. Système selon la revendication 5, dans lequel l'échangeur thermique au glycol (11) est disposé en série avec an appareil d'expansion (10) et en parallèle avec une vanne (13).

7. Système selon l'une quelconque des revendications précédentes comprenant un échangeur thermique réfrigérant-réfrigérant (4) à travers lequel du réfrigérant circule depuis le refroidisseur externe (3) en mode air conditionné et qui est contourné par le réfrigérant comprimé en mode pompe à chaleur.
